# EUROPÄISCHE PATENTSCHRIFT

(11) **EP 2 223 777 B1**
(45) Veröffentlichungstag und Bekanntmachung des Hinweises auf die Patenterteilung: **11.11.2015**
(21) Anmeldenummer: 10001082.6
(22) Anmeldetag: 03.02.2010
(51) Int. Cl.: B25F 5/00, A01G 3/053, A01D 34/81

(54) **Akkubetriebenes, handgeführtes Elektrogerät**
Battery-operated, hand-held electric device
Appareil électrique portatif fonctionnant sur batterie

(30) Priorität: 27.02.2009 DE 102009012177
(43) Veröffentlichungstag der Anmeldung: 01.09.2010
(73) Patentinhaber: Andreas Stihl AG & Co. KG, 71336 Waiblingen (DE)
(72) Erfinder: Mang, Harald, 71364 Winnenden (DE); Müller, Matthias, 73614 Schorndorf-Haubersbronn (DE); Reber, Volker, 74544 Michelbach (DE)
(74) Vertreter: Wasmuth, Rolf

(56) Entgegenhaltungen:
- WO-A1-2009/059863
- DE-A1- 19 651 723
- DE-A1-102006 000 084
- US-A- 3 527 971
- US-A- 4 314 170
- US-A- 6 043 575
- US-A1- 2004 226 731

## Beschreibung

Die Erfindung betrifft ein handgeführtes Elektrogerät, insbesondere ein handgeführtes Arbeitsgerät wie eine Heckenschere, eine Motorkettensäge, ein Freischneider oder dgl. nach dem Oberbegriff des Anspruchs 1.

Aus der DE 1 297 394 B ist eine kabelgebundene Heckenschere mit einem Elektromotor bekannt, der in einem turmartigen Gehäuse angeordnet ist. Innerhalb des Gehäuseturms ist ein Kühllufteintrittsraum ausgebildet, aus dem der Elektromotor über ein Lüfterrad Kühlluft in sein Motorgehäuse ansaugt. Über eine Ausblasöffnung am gegenüberliegenden Ende des Motorgehäuses wird die Kühlluft in einen Kühlluftaustrittsraum ausgeblasen, der über einen Ringspalt zur Umgebung belüftet ist. Da der Kühllufteintrittsraum und der Kühlluftaustrittsraum gemeinschaftlich innerhalb des glockenförmigen Gerätegehäuses angeordnet sind, kann bei ungünstigen Betriebsbedingungen ein Kühlluftkurzschluss auftreten. Wird z. B. die Kühlluftzuführ zum Kühllufteintrittsraum behindert, saugt der Elektromotor über das glockenförmige Gehäuse seine Kühlluft aus dem Kühlluftaustrittsraum an, was zu unzulässigen Temperaturerhöhungen des antreibenden Elektromotors führen kann.

Aus der US 6,043,575 A ist ein Arbeitsgerät bekannt, dessen Elektromotor in einem Halter eingesetzt und in einen Gehäusetopf eingeschoben ist. Über Stützwände des Halters werden im Gehäusetopf ein Kühllufteintrittsraum sowie ein Kühlluftaustrittsräum begrenzt. Zwischen den Stützwänden und dem Gehäusetopf sind in unbestimmter Anzahl Lücken zugelassen. Der Kühllufteintrittsraum weist ein Küllufteintrittsfenster auf, das zwei schmale Schlitze für den Zutritt von Kühlluft aufweist. Das Kühlluftaustrittsfenster liegt in einer vom Kühllufteintrittsfenster abgewandten Gehäusefläche.

Aus der DE 10 2006 000 084 A1 ist ein elektrisches Arbeitsgerät bekannt, dessen innerer Gehäuseraum durch eingestellte Wände in einen Sogbereich und einen Druckbereich aufgeteilt ist Zwischen den Bereichen sind Durchgänge für Litzen zu öffnen. Dem Sogbereich wird Kühlluft über ein Kühllufteintrittsfenster zugeführt, das im Bodenbereich des Gehäuses ausgebildet ist. Das Kühlluft aus dem Druckbereich abführende Kühlluftaustrittsfenster ist - von dem Kühllufteintrittsfenster abgewandt - an der vorderen Stirnseite des Arbeitsgerätes vorgesehen.

In der US 2004/0226731 A1 ist ein Arbeitsgerät mit einem elektrischen Antriebsmotor beschrieben, wobei der Gehäuseinnenraum durch Gehäuseinnenwände in einen Kühllufteintrittsraum und einen Kühlluftaustrittsraum aufgeteilt ist. Eine Zuströmöffnung zum Kühllufteintrittsraum liegt im Dachbereich des Gehäuses; die Anführung der Kühlluft erfolgt über ein Kühlluftaustrittsfenster im Bodenbereich des Gehäuses.

Die DE 196 51 723 A1 offenbart eine Kühlluftführung, bei der die Kühlluft am Gehäuseumfang angesaugt und über ein Kühlluftaustrittsfenster im Griffbereich aufgeblasen wird.

Auch die WO 2009/059863 A1 zeigt an einer Elektrowerkzeugmaschine mit räumlichem Abstand voneinander liegende und voneinander abgewandte Fenster für den Kühllufteintritt und den Kühlluftaustritt.

Der Erfindung liegt die Aufgabe zugrunde, ein handgeführtes Elektrogerät nach dem Oberbegriff des Anspruchs 1 derart auszubilden, dass bei einfacher Gestaltung des Gehäuses eine effektive Kühlung auch unter ungünstigen Betriebsbedingungen gewährleistet ist.

Die Aufgabe wird erfindungsgemäß dadurch gelöst, dass der Kühllufteintrittsraum und der Kühlluftaustrittsraum durch eine innere Gehäusewand weitgehend luftdicht voneinander getrennt sind, so dass ein Ansaugen von warmer Luft aus dem Kühlluftaustrittsraum weitgehend ausgeschlossen werden kann. Das Motorgehäuse des Elektromotors bildet die einzige ausgeprägte Strömungsverbindung zwischen den Räumen, so dass - auch unter ungünstigen Betriebsbedingungen - die kühlende Strömungsverbindung zwischen Kühllufteintrittstraum und Kühlluftaustrittsraum erzwungen ist. Die konstruktiv vorgesehene, einzige ausgeprägte Strömungsverbindung gibt an, dass im Wesentlichen der gesamte Kühlluftstrom durch diese Strömungsverbindung strömt und eventuell auftretende Nebenströmungen unbedeutend gering sind. Dabei bilden das Kühllufteintrittsfenster und das Kühlluftaustrittsfenster in der Außenwand des Gehäuses ein gemeinsames Fenster.

Vorteilhaft ist das gemeinsame Fensterfeld durch eine innere Gehäusewand geteilt, die innen an der Außenwand des Gerätegehäuses anliegt. Dabei ist die Teilung so vorgesehen, dass die einströmende Kühlluft und die ausströmende Kühlluft eine gleiche Strömungsorientierung haben, wobei vorzugsweise die Strömungen unter einem Winkel von etwa 90° bis 130° zueinander liegen.

Das Gerätegehäuse weist eine Gerätelängsachse auf, wobei auf jeder Längsseite des Gerätegehäuses ein Kühllufteintrittsfenster und/oder ein Küthlluftaustrittsfenster angeordnet ist. Dadurch ist gewährleistet, dass der Kühllufteintrittsraum durch zwei Kühllufteintrittsfenster gespeist ist, wodurch auch bei ungünstigen Betriebsbedingungen ein ausreichender Kühlluftzutritt gewährleistet ist. Die beiden Ausblasöffnungen auf jeder Längsseite des Gerätegehäuses stellen in gleicher Weise ein störungsfreies Abströmen der erwärmten Kühlluft sicher.

In bevorzugter Ausgestaltung weist das Motorgehäuse zwei Ausblasöffnungen auf, wobei jeder Ausblasöffnung ein Austrittsfenster im Gerätegehäuse zugeordnet ist. Obwohl beide Ausblasöffnungen in einen gemeinsamen Kühlluftaustrittsraum münden, wird der Ausblasstrom so gerichtet, dass die erste Ausblasöffnung im Wesentlichen über ein erstes Kühlluftaustrittsfenster auf der einen Längsseite des Gerätegehäuses und die zweite Ausblasöffnung im Wesentlichen über ein zweites Kühlluftustrittsfenster auf der anderen Längsseite des Gerätegehäuses Kühlluft abbläst.

Bevorzugt besteht das Gerätegehäuse aus einer oberen Gehäuseschale und einer unteren Gehäuseschale, wobei das Kühllufteintrittsfenster und das Küblluftaustrittsfenster in der oberen Gehäuseschale ausgebildet sind. Dabei wird der Kühllufteintrittsraum durch die Außenwand des Gerätegehäuses und die innere Gehäusewand begrenzt, wobei die innere Gehäusewand Teil einer Luftführungshutze ist, die von dem Elektromotor getragen ist, zwecksmäßig am Elektromotor befestigt ist. Die Luftführungshutze weist einen Boden auf, in dem die Ansaugöffnung des Lüfterrades liegt.

In Weiterbildung der Erfindung liegt im Strömungsweg der Kühlluft zwischen dem Eintrittsfenster und dem Austrittsfenster ein Wärmetauscher für ein elektrisches Bauteil zur Steuerung des Elektromotors. Zweckmäßig liegt der Wärmetauscher im Kühlluftaustrittsraum, insbesondere im Ausblasstrom einer Ausblasöffntung des Motorgehäuses.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: eine Seitenansicht auf ein handgeführtes Elektrogerät am Beispiel einer Heckenschere,
- Fig. 2: in schematischer Ansicht den Strömungsverlauf der Kühlluft im Gehäuse einer Heckenschere nach Fig. 1,
- Fig. 3: eine perspektivisch dargestellte, teilgeschnittene Heckenschere nach Fig. 1,
- Fig. 4: eine Draufsicht auf die Heckenschere nach Fig. 3,
- Fig. 5: eine Seitenansicht der Heckenschere nach Fig. 1 mit abgenommener oberer Gehäuseschale,
- Fig. 6: eine Frontansicht der Heckenschere nach Fig. 5,
- Fig. 7: eine Ansicht auf eine Luftführungshutze von unten,
- Fig. 8: eine Seitenansicht der Luftführungshutze nach Fig. 7,
- Fig. 9: in schematischer Darstellung eine Explosionsdarstellung der Heckenschere nach Fig. 1.

Das in den Figuren dargestellte handgeführte Elektrogerät ist ein insbesondere tragbares, handgeführtes Arbeitsgerät und am Beispiel einer Heckenschere 1 beschrieben. Das handgeführte Arbeitsgerät kann ebenso eine Motorsäge, ein Trennschleifer, ein Freischneider, ein Kantenscheider, ein Hochentaster, ein Blasgerät, ein Sprühgerät, ein Sauggerät, ein Erdbohrgerät, ein Kombimotorgerät für multifunktionelle Vorsätze, ein Kehrgerät, eine Motorhacke, eine Bodenfräse, ein Hochdruckreiniger, ein Rasenmäher, ein Vertikutierer, ein Häcksler, ein Nass- oder Trockensauger oder dgl. Arbeitsgerät sein.

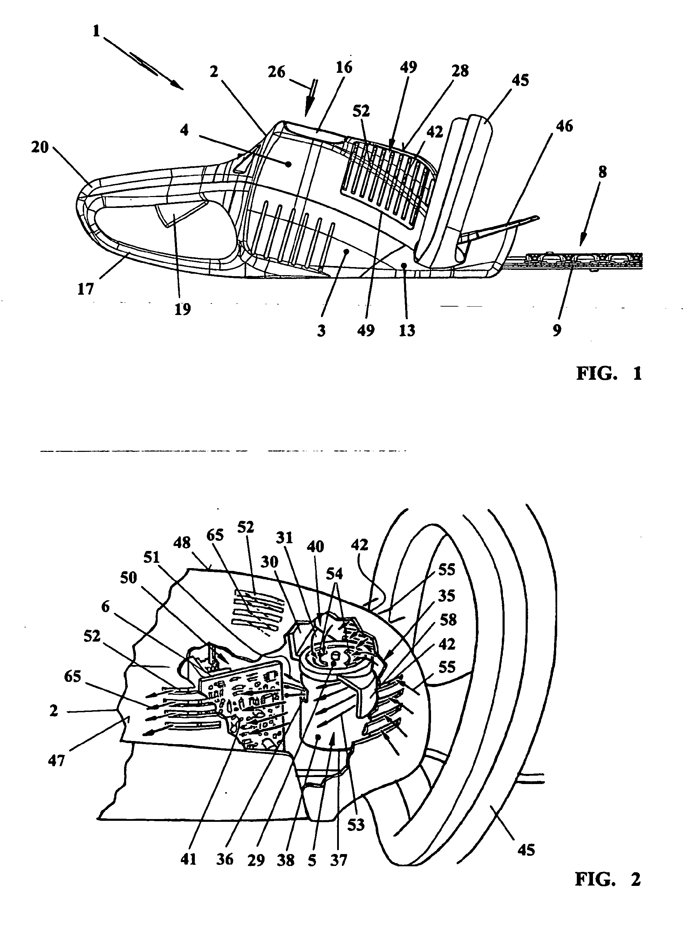

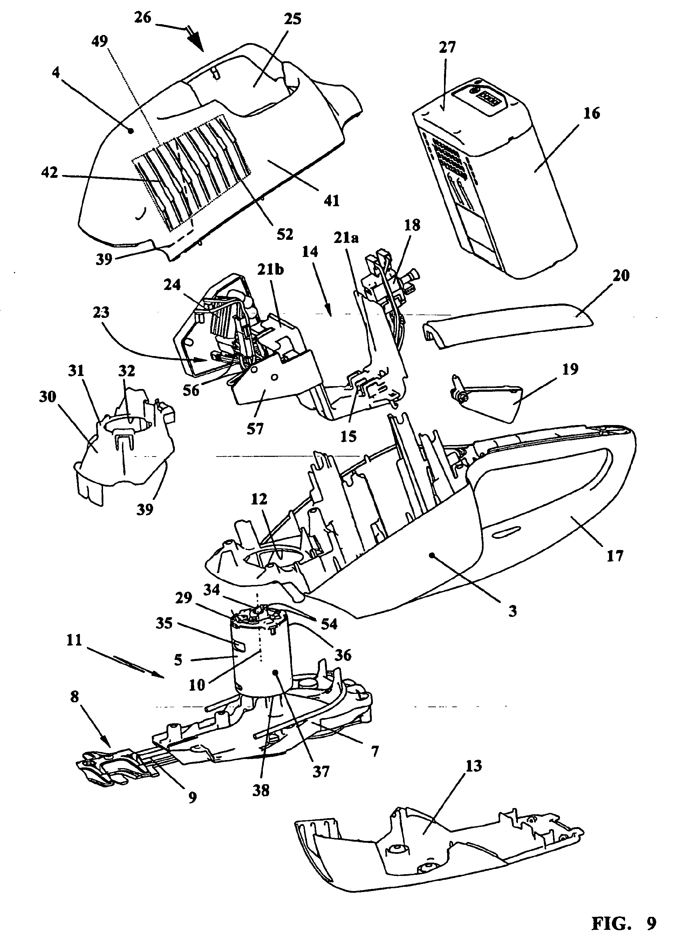

Das dargestellte handgeführte Elektrogerät weist ein Gerätegehäuse 2 auf, das - wie insbesondere Fig. 9 zeigt - im Wesentlichen aus einer Gehäuseunterschale 3 und einer Gehäuseoberschale 4 zusammengesetzt ist. Im Gerätegehäuse 2 ist - wie insbesondere die Fig. 2 bis 4 zeigen - ein Elektromotor 5 angeordnet, der insbesondere ein bürstenloser Hochleistungsmotor sein kann. Ein derartiger bürstenloser Elektromotor 5 benötigt zum Betrieb eine entsprechende Steuerelektronik 23, die in Fig. 2 auf einer Platine 6 angeordnet ist.

Der Elektromotor 5 treibt über ein nicht näher dargestelltes Getriebe 7 (Fig. 9) ein Werkzeug 8 des Arbeitsgerätes an, welches im gezeigten Ausführungsbeispiel ein Messerbalken 9 mit hin- und hergehenden Schermessern ist.

Wie den Figuren zu entnehmen, liegt die Drehachse 10 des antreibenden Elektromotors 5 etwa lotrecht zu der von dem Messerbalken 9 aufgespannten Ebene.

Das Getriebe 7 bildet zusammen mit dem Messerbalken 9 und dem Antriebsmotor 5 eine Baueinheit 11, an der das Gerätegehäuse 2 - bestehend aus der Gehäuseunterschale 3 und der Gehäuseoberschale 4 - festgelegt ist. Wie Fig. 9 zeigt, wird die Gehäuseunterschale 3 auf die Baueinheit 11 aus Getriebe 7, Messerbalken 9 und Elektromotor 5 aufgesetzt, wobei der Elektromotor 5 eine Aufnahmeöffnung 12 der Gehäuseunterschale 3 durchgreift und so innerhalb des Gerätegehäuses 2 zu liegen kommt. Nach Aufsetzen der Gehäuseunterschale 3 wird auf der gegenüberliegenden Seite der Baueinheit 11 eine Bodenschale 13 festgelegt, die das Getriebe 7 nach unten vollständig abdeckt, so dass lediglich der Messerbalken 9 aus dem Gerätegehäuse 2 nach vorne vorsteht.

In die Gehäuseunterschale 3 wird ein U-förmiger Akkuträger 14 von oben eingesetzt, der im Bodenbereich Kontakte 15 für einen Akkupack 16 aufweist, welcher in den Akkuträger 14 einsetzbar ist.

Wie Fig. 9 deutlich zeigt, hält der Akkuträger 14 an seinen Schenkeln 21a, 21b verschiedene Bauteile des Elektrogerätes.

An dem einen, einem hinteren Handgriff 17 zugeordneten Schenkel 21a ist ein Drehzahlsteller 18 festgelegt, der über einen Gashebel 19 zu betätigen ist, der im oberen Teil des hinteren Handgriffs 17 verschwenkbar gehalten ist. Der hintere Handgriff 17 wird durch eine Handgriffoberschale 20 abgedeckt.

Der gegenüberliegende Schenkel 21b des Akkuträgers 14 ist zugleich Trennwand zu einem Motorraum 22, der zwischen dem Akkuträger 14 und dem Werkzeug 8 des Arbeitsgerätes ausgebildet ist. Der Motorraum 22 ist somit von der unteren Gehäuseschale 3, dem Schenkel 21 des Akkuträgers 14 und der oberen Gehäuseschale 4 begrenzt.

Der Schenkel 21b trägt die Steuerelektronik 23 zum Betrieb des im Ausführungsbeispiel als Bürstenläufer ausgebildeten Elektromotors 5, wobei die Steuerelektronik 23 im Motorraum 22 liegt. Wie Fig. 9 zeigt, ist ein Wärmetauscher 24, der bevorzugt als Kühlkörper ausgebildet ist, auf der einen Längsseite 47 des Motorraums 22 vorgesehen, während auf der gegenüberliegenden Längsseite 48 weitere elektronische Bauteile der Steuerelektronik 23 angeordnet sind.

Die obere Gehäuseschale 4 weist eine Einschuböffnung 25 für den Akkupack 16 auf, so dass der Akkupack 16 - wie in Fig. 1 gezeigt - von oben in Pfeilrichtung 26 in das Gerätegehäuse 2 eingesetzt werden kann. Wie Fig. 1 zeigt, liegt die obere Stirnseite 27 des Akkupacks 16 in der eingeschobenen Betriebsstellung nach Fig. 1 etwa in einer Ebene mit der Gehäuseoberseite 28 des Gerätegehäuses 2.

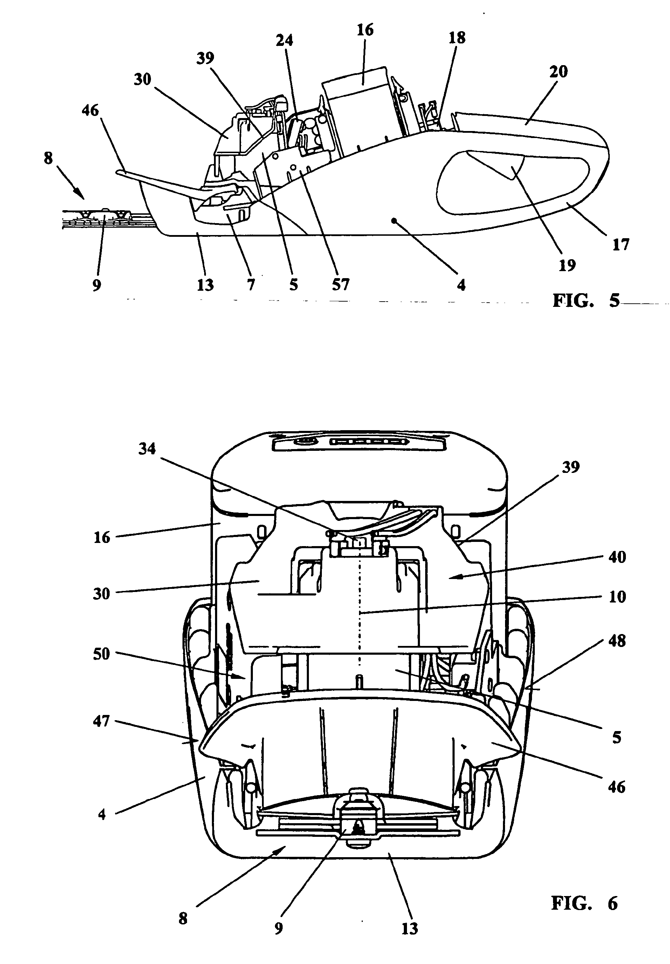

Wie die Fig. 2 bis 6 zeigen, trägt der Elektromotor 5 eine Luftführungshutze 30, die den Elektromotor 5 kappenartig übergreift. Zweckmäßig ist die Luftführungshutze 30 am Elektromotor 5 befestigt. Im Boden 31 der Luftführungshutze 30 ist eine dem Durchmesser des Elektromotors 5 angepasste Öffnung 32 vorgesehen, in die das dem Getriebe 7 abgewandte stirnseitige Ende 29 des Elektromotors 5 im Wesentlichen luftdicht eingesetzt ist.

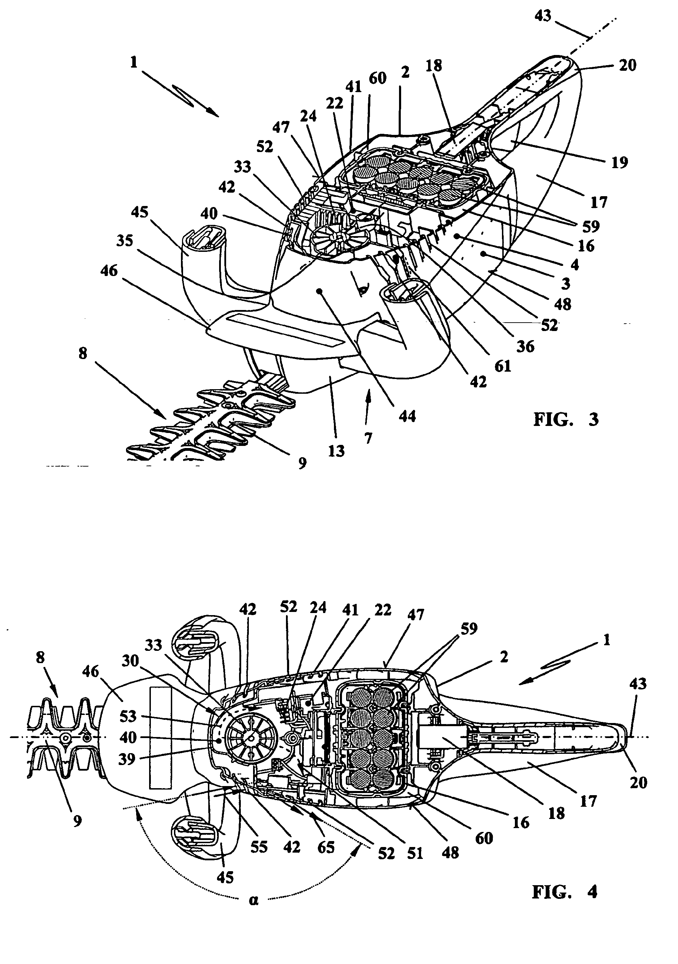

Am stirnseitigen Ende 29 des Elektromotors ist - wie die Fig. 3 und 4 zeigen - ein Lüfterrad 33 gehalten, welches auf der Motorwelle 34 befestigt ist und mit dieser dreht. Das Lüfterrad 33 saugt axial über in der Stirnseite 29 vorgesehene Ansaugöffnungen 54 Kühlluft 55 in den Elektromotor 5 ein und bläst diese über vorzugsweise radiale Ausblasöffnungen 35, 36 im Mantel 37 des Motorgehäuses 38 aus. Wie Fig. 9 zeigt, liegt die eine Ausblasöffnung 35 nach vorne gewandt, also dem Messerbalken 9 zugewandt, während die - vorzugsweise diametral zur Drehachse 10 im Motorgehäuse 38 vorgesehene - andere Ausblasöffnung 36 nach hinten gewandt liegt, also dem hinteren Handgriff 17 des Gerätegehäuses 2 zugewandt liegt.

Die Luftführungshutze 30 liegt derart im Motorraum 22, dass ihr Rand 39 als innere Gehäusewand auf der Innenseite des Gerätegehäuses 2 anliegt, im gezeigten Ausführungsbeispiel innerhalb des Gerätegehäuses 2 an der Wand der oberen Gehäuseschale 4 anliegt.

Die schalenartig gestaltete Luftführungshutze 30 liegt über ihren gesamten Rand 39 an der oberen Gehäuseschale 4 an, wodurch ein Kühllufteintrittsraum 40 gebildet ist, der einerseits von der Luftführungshutze 30 und andererseits von der Wand 41 der oberen Gehäuseschale 4 des Gerätegehäuses 2 begrenzt ist. Im Bereich des Kühllufteintrittsraums 40 sind im Gerätegehäuse 2, im Ausführungsbeispiel in der Gehäuseoberschale 4, Kühllufteintrittsfenster 42 ausgebildet. Wie die Fig. 3 und 4 zeigen, weist das Gerätegehäuse 2 der Heckenschere 1 eine Gerätelängsachse 43 auf, die sich in Richtung des Messerbalkens 9 erstreckt. Das Gerätegehäuse 2 hat auf der dem Messerbalken 9 abgewandt liegenden Seite einen hinteren Handgriff 17 und im Bereich der vorderen Stirnseite 44 einen vorderen Handgriff 45, der als Bügelgriff ausgebildet ist. Zwischen dem Bügelgriff 45 und dem Messerbalken 9 ist ein Handschutz 46 vorgesehen.

Auf jeder Längsseite 47, 48 des Gerätegehäuses 2 ist ein Kühllufteintrittsfenster 42 vorgesehen, so dass in den Kühllufteintrittsraum 40 von beiden Längsseiten 47 und 48 Kühlluft 55 zuströmt. Dies stellt unabhängig von den Arbeitsbedingungen eine ausreichende Kühlluftzufuhr sicher.

Unterhalb der Luftführungshutze 30 ist im Motorraum 22 ein Kühlluftaustrittsraum 50 gebildet, der einerseits durch die Luftführungshutze 30 begrenzt ist und andererseits durch das Gerätegehäuse 2, nämlich die Gehäuseunterschale 3 und die Gehäuseoberschale 4 sowie den Schenkel 21b des Akkuträgers 14. Der Kühlluftaustrittsraum 50 wird über Kühlluftaustrittsfenster 52 entlüftet, wobei die Kühlluftaustrittsfenster 52 vorzugsweise in der oberen Gehäuseschale 4 des Gerätegehäuses 2 ausgebildet sind. Entsprechend den Kühllufteintrittsfenstern 42 sind auf jeder Längsseite 47 und 48 des Gerätegehäuses 2 je ein Kühlluftaustrittsfenster 52 vorgesehen.

In vorteilhafter Ausgestaltung der Erfindung bilden das Kühllufteintrittsfenster 42 und das Kühlluftaustrittsfenster 52 ein gemeinsames Fensterfeld 49 in der Außenwand 41 des Gerätegehäuses 2. Dieses gemeinsame Fensterfeld 49 ist durch die Luftführungshutze 30 bzw. durch deren innere Gehäusewand 39 innerhalb des Gerätegehäuses 2 in ein Eintrittsfenster 42 und ein Austrittsfenster 52 aufgeteilt. Dabei wird die Anordnung zweckmäßig so getroffen, dass der Ausblasstrom 51 der einen, hinteren Ausblasöffnung 36 dem einen Kühlluftaustrittsfenster 52 auf der einen Längsseite 48 zugeordnet ist, während der Ausblasstrom 53 der anderen, vorderen Ausblasöffnung 35 durch die Luftführungshutze 30 derart nach hinten umgelenkt ist, dass ihr Ausblasstrom 53 im Wesentlichen über das Kühlluftaustrittsfenster 52 auf der anderen Längsseite 47 des Gerätegehäuses 2 austritt. Bevorzugt sind somit den Ausblasöffnungen 35 und 36 jeweils ein Kühlluftaustrittsfenster 52 in der einen Längsseite 47 oder der anderen Längsseite 48 zugeordnet.

Die Anordnung ist so getroffen, dass die eintretende Kühlluft 55 von vorne in das nahe dem Bügelgriff 45 liegende vordere Kühllufteintrittsfenster 42 einströmt und der Ausblasstrom der abströmenden Kühlluft 65 etwa in gleicher Strömungsrichtung orientiert in Richtung zum hinteren Handgriff 17 aus dem hinteren Kühlluftaustrittsfenster 52 abströmt. In Draufsicht auf das Gerätegehäuse 2 - vgl. Fig. 4 - schließt die einströmende Kühlluft 55 und die abströmende Kühlluft 65 einen Winkel α ein, der kleiner als 180° ist, vorzugsweise etwa 150° bis 90° ist.

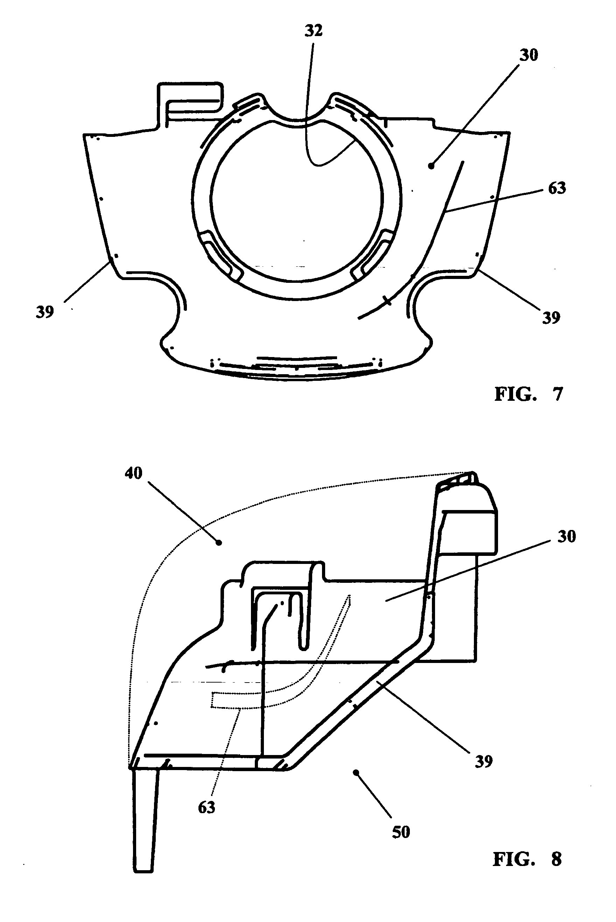

Es kann zweckmäßig sein, am Kühllufteintrittsfenster 42 und/oder am Kühlluftaustrittsfenster 52 Leitrippen 61 (Fig. 3) zur Strömungsführung vorzusehen um z. B. zu erreichen, das ausströmende erwärmte Kühlluft nicht wieder über das Kühllufteintrittsfenster angesaugt wird. Derartige Leitrippen 61 können sowohl auf der Außenseite wie auf der Innenseite des Fensters 42, 52 angeordnet sein. In vorteilhafter Weiterbildung der Erfindung sind an der Luftführungshutze 30 Leitrippen 63 (Fig. 7, 8) vorgesehen, die der Luftführung des Ausblasstroms 51, 53 ebenso dienen können wie der Leitung der eintretenden Kühlluft 55 zu den Ansaugöffnungen 54 in der Stirnseite 29 des Elektromotors 5.

Der Kühllufteintrittsraum 40 und der Kühlluftaustrittsraum 50 sind durch die innere Gehäusewand 39 der Luftführungshutze 30 voneinander getrennt, vorzugsweise weitgehend luftdicht voneinander getrennt, wobei das Motorgehäuse 38 des Elektromotors 5 die im Wesentlichen einzige Strömungsverbindung zwischen dem Kühllufteintrittsraum 40 und dem Kühlluftaustrittsraum 50 bildet. Die konstruktiv vorgesehene, einzige ausgeprägte Strömungsverbindung hat zum Ziel, dass im Wesentlichen der gesamte Kühlluftstrom durch diese Strömungsverbindung strömt und eventuell auftretende Nebenströmungen weitgehend vermieden oder unbedeutend gering sind. Undichtigkeiten oder geringe Falschluftströme können dennoch zugelassen sein, sofern keine vorzugsweise erhöhte Dichtigkeit ausgeführt ist. Bei einer derartigen erhöhten Dichtigkeit werden mehr als 85%, vorzugsweise mehr als 95% bis zu 99% der gesamten Kühlluft über die einzige Strömungsverbindung strömen.

Wie in Fig. 2 schematisch dargestellt, tritt im Bereich des vorderen Handgriffs 45 Kühlluft 55 über die Kühllufteintrittsfenster 42 von beiden Längsseiten 47 und 48 des Gerätegehäuses 2 in den Kühllufteintrittsraum 40 ein. Über Ansaugöffnungen 54 in der Stirnseite 29 des Elektromotors 5, der im Boden 31 der Luftführungshutze 30 gehalten ist, tritt die Kühlluft 55 in den Elektromotor 5 ein, kühlt diesen und wird über die Ausblasöffnungen 35 und 36 im Mantel 37 des Motorgehäuses 38 ausgeblasen. Dabei wird der eine Ausblasstrom 51 direkt auf im Kühlluftaustrittsraum 50 angeordnete elektronische Bauteile 56 geführt; die elektronischen Bauteile 56 stehen bevorzugt mit einer wärmeleitenden Wand 57 in Verbindung, die als Wärmetauscher im Ausblasstrom 51 der hinteren Ausblasöffnung 36 liegt.

Der Ausblasstrom 53 der vorderen Ausblasöffnung 35 wird über Wandteile 58 der Luftführungshutze 30 (Fig. 4) nach hinten umgelenkt und überstreicht einen Wärmetauscher 24, der mit einem Leistungsbauteil wärmeübertragend verbunden ist.

Wie Fig. 3 zeigt, ist das Gehäusevolumen des Gerätegehäuses 2 im Wesentlichen bestimmt durch den Akkupack 16, der in einen entsprechenden Akkuschacht 60 eingesetzt ist, der zwischen dem hinteren Handgriff 17 und dem vorderen Motorraum 22 liegt. Der Motorraum 22 liegt in einem Abschnitt des Gerätegehäuses 2, der zwischen dem vorderen, bügelartigen Handgriff 45 und dem Akkuschacht 60 liegt.

Der Akkupack 16 des Ausführungsbeispiels besteht aus einer Vielzahl von Zellen 59; im Ausführungsbeispiel sind zwei Lagen von je zehn Zellen 59 angeordnet. Die Zellen 59 sind bevorzugt wiederaufladbare Zellen, z. B. Akkuzellen wie NiCd-Zellen (Nickel-Cadmium-Zellen), NiMh-Zellen (Nickel-Metallhydrid-Zellen), LiIo-Zellen (Lithium-Ionen-Zellen), LiPo-Zellen (Lithium-Polymer-Zellen), LiFePo4-Zellen (Lithium-Eisen-Phosphat-Zellen), Lithium-Titanat-Zellen oder dgl. aufgebaute Zellen und haben eine Zellenspannung von 2 Volt bis 5 Volt, vorzugsweise etwa 3,6 Volt bis 3,7 Volt. Mit den verwendeten Zellen können je nach der ausgeführten Schaltung (Reihenschaltung, Parallelschaltung) Akkupackspannungen von 12 Volt bis 150 Volt, vorzugsweise 25 Volt bis 50 Volt bereitgestellt werden.

## Patentansprüche

1. Handgeführtes Elektrogerät, insbesondere tragbares, handgeführtes Arbeitsgerät wie eine Heckenschere, eine Motorkettensäge, ein Freischneider oder dergleichen mit einem Gerätegehäuse (2), in dem ein über ein elektrisches Bauteil (56) zu steuernder Elektromotor (5) zum Antrieb eines Werkzeugs (8) angeordnet ist, wobei der Elektromotor (5) über ein Lüfterrad (33) Kühlluft (55) in ein Motorgehäuse (38) ansaugt und über eine Ausblasöffnung (35, 36) aus dem Motorgehäuse (38) ausbläst und die Kühlluft über ein Kühllufteintrittsfenster (42) in der Außenwand (41) des Gerätegehäuses (2) in einen Kübllufteintrittsraum (40) innerhalb des Gerätegehäuses (2) einströmt und aus einem Kühlluftaustrittsraum (50) innerhalb des Gerätegehäuses (2) über ein Kühlluftaustrittsfenster (52) in der Außenwand (41) des Gerätegehäuses (2) aus dem Gerätegehäuse (2) austritt, wobei der Kühllufteintrittsraum (40) und der Kühlluftaustrittsraum (50) durch eine innere Gehäusewand (39) weitgehend luftdicht voneinander getrennt sind und das Motorgehäuse (38) des Elektromotors (5) die einzige ausgeprägte Strömungsverbindung zwischen den Räumen (40, 50) bildet, **dadurch gekennzeichnet, dass** das Kühllufteintrittsfenster (42) und das Kühlluftaustrittsfenster (52) in der Außenwand (41) des Gehäuses (2) ein gemeinsames Fensterfeld (49) bilden.

2. Elektrogerät nach Anspruch 1,
dadurch gekenntzeichnet, dass das gemeinsame Fenster (49) durch die innere Gehäusewand (39) geteilt ist, die innen an der Außenwand (41) des Gerätegehäuses (2) anliegt.

3. Elektrogerät nach Anspruch 1 oder 2,
**dadurch gekennzeichnet, dass** der Kühllufteintrittsraum (40) durch zwei Kühllufteintrittsfenster (42) gespeist ist.

4. Elektrogerät nach einem der Ansprüche 1 bis 3,
**dadurch gekennzeichnet, dass** das Motorgehäuse (38) zwei Ausblasöffnungen (35, 36) aufweist und jeder Ausblasöffnung (35, 36) ein Austrittsfenster (52) im Gerätegehäuse (2) zugeordnet ist.

5. Elektrogerät nach einem der Ansprüche 1 bis 4,
**dadurch gekennzeichnet, dass** das Gerätegehäuse (2) eine Gerätelängsachse (43) aufweist und auf jeder Längsseite (47,48) des Gerätegehäuses (2) ein Kühllufteintrittsfenster (42) und ein Kühlluftaustrittsfenster (52) angeordnet ist.

6. Elektrogerät nach Anspruch 4 oder 5,
**dadurch gekennzeichnet, dass** die erste Ausblasöffnung (35) über ein erstes Kühlluftaustrittsfenster (52) auf der einen Längsseite (47) des Gerätegehäuses (2) und die zweite Ausblasöffnung (36) über ein zweites Kühlluftaustrittsfenster (52) auf der anderen Längsseite (48) des Gerätegehäuses (2) Kühlluft abbläst.

7. Elektrogerät nach einem der Ansprüche 1 bis 6,
**dadurch gekennzeichnet, dass** das Gerätegehäuse (2) aus einer oberen Gehäuseschale (4) und einer unteren Gehäuseschale (3) zusammengesetzt ist und das Kühllufteintrittsfenster (42) und das Kühlluftaustrittsfenster (52) in der oberen Gehäuseschale (4) ausgebildet sind.

8. Elektrogerät nach einem der Ansprüche 1 bis 7,
**dadurch gekennzeichnet, dass** der Kühllufteintrittsraum (40) durch die Außenwand (41) des Gerätegehäuses (2) und die innere Gehäusewand (39) begrenzet ist.

9. Elektrogerät nach einem der Ansprüche 1 bis 8,
**dadurch gekennzeichnet, dass** der Elektromotor (5) eine Luftführungshutze (30) trägt, die die innere Gehäusewand (39) bildet.

10. Elektrogerät nach Anspruch 9,
**dadurch gekennzeichnet, dass** die Luftführungshutze (30) am Elektromotor (5) befestigt ist.

11. Elektrogerät nach Anspruch 9 oder 10,
**dadurch gekennzeichnet, dass** die Luftführungshutze (30) einen Boden (31) des Kühllufteintrittsraums (40) bildet und die Ansaugöffnung (54) zum Lüfterrad (33) im Boden (31) der Luftführungshutze (30) liegt.

12. Elektrogerät nach einem der Ansprüche 1 bis 11,
**dadurch gekennzeichnet, dass** im Strömungsweg der Kühlluft (55) zwischen dem Eintrittsfenster (42) und dem Austrittsfenster (52) ein Wärmetauscher (24) für ein elektrisches Bauteil (56) zur Steuerung des Elektromotors (5) liegt

13. Elektrogerät nach Anspruch 12,
**dadurch gekennzeichnet, dass** der Wärmetauscher (24) im Kühlluftaustrittsraum (50) angeordnet ist

14. Elektrogerät nach Anspruch 12 oder 13,
**dadurch gekennzeichnet, dass** der Wärmetauscher (24) im Ausblasstrom (53) der Ausblasöffnung (35) des Motorgehäuses (38) liegt.

15. Elektrogerät nach einem der Ansprüche 1 bis 14,
**dadurch gekennzeichnet, dass** ein elektrisches Bauteil (56) zur Steuerung des Elektromotors (5), vorzugsweise zusammen mit einem Wärmetauscher (24), im Strömungsweg der Kühlluft liegt.

## Claims

1. Hand-held electric implement, in particular portable hand-held working implement, such as a hedge cutter, a motorised chainsaw, a free cutter or the like, comprising an implement housing (2), in which an electric motor (5) controlled by an electric component (56) for driving a tool (8) is accommodated, wherein the electric motor (5) draws cooling air (55) into a motor housing (38) via a fan impeller (33) and blows it out of the motor housing (38) via a blow-out opening (35, 36), and wherein the cooling air flows into a cooling air entry chamber (40) within the implement housing (2) via a cooling air entry window (42) in the outer wall (41) of the implement housing (2) and emerges from the implement housing (2) from a cooling air exit chamber (50) within the implement housing (2) via a cooling air exit window (52) in the outer wall (41) of the implement housing (2), wherein the cooling air entry chamber (40) and the cooling air exit chamber (50) are largely separated from each other in an air-tight arrangement by an inner housing wall (39) and the motor housing (38) of the electric motor (5) forms the only distinct flow connection between the chambers (40, 50),
**characterised in that** the cooling air entry window (42) and the cooling air exit window (52) form a common window panel (49) in the outer wall (41) of the housing (2).

2. Electric implement according to claim 1,
**characterised in that** the common window (49) is divided by the inner housing wall (39), which bears against the outer wall (41) of the implement housing (2) on the inside.

3. Electric implement according to claim 1 or 2,
**characterised in that** the cooling air entry chamber (40) is supplied by two cooling air entry windows (42).

4. Electric implement according to any of claims 1 to 3,
**characterised in that** the motor housing (38) has two blow-out openings (35, 36) and an exit window (52) in the implement housing (2) is assigned to each of the blow-out openings (35, 36).

5. Electric implement according to any of claims 1 to 4,
**characterised in that** the implement housing (2) has a longitudinal implement axis (43) and a cooling air entry window (42) and a cooling air exit window (52) are located on each long side (47, 48) of the implement housing (2).

6. Electric implement according to claim 4 or 5,
**characterised in that** the first blow-out opening (35) blows out cooling air via a first cooling air exit window (52) on the one long side (47) of the implement housing (2) and the second blow-out opening (36) blows out cooling air via a second cooling air exit window (52) on the other long side (48) of the implement housing (2).

7. Electric implement according to any of claims 1 to 6,
**characterised in that** the implement housing (2) is composed of an upper housing shell (4) and a lower housing shell (3), and **in that** the cooling air entry window (42) and the cooling air exit window (52) are formed in the upper housing shell (4).

8. Electric implement according to any of claims 1 to 7,
**characterised in that** the cooling air entry chamber (40) is bounded by the outer wall (41) of the implement housing (2) and by the inner housing wall (39).

9. Electric implement according to any of claims 1 to 8,
**characterised in that** the electric motor (5) supports an air ducting scoop (30), which forms the inner housing wall (30).

10. Electric implement according to claim 9,
**characterised in that** the air ducting scoop (30) is secured to the electric motor (5).

11. Electric implement according to claim 9 or 10,
**characterised in that** the air ducting scoop (30) forms a base (31) of the cooling air entry chamber (40) and the intake opening (54) to the fan impeller (33) is located in the base (31) of the air ducting scoop (30).

12. Electric implement according to any of claims 1 to 11,
**characterised in that** a heat exchanger (24) for an electric component (56) for the control of the electric motor (5) is provided in the flow path of the cooling air (55) between the entry window (42) and the exit window (52).

13. Electric implement according to claim 12,
**characterised in that** the heat exchanger (24) is located in the cooling air exit chamber (50).

14. Electric implement according to claim 12 or 13,
**characterised in that** the heat exchanger (24) is located in the blow-out flow (53) of the blow-out opening (35) of the motor housing (38).

15. Electric implement according to any of claims 1 to 14,
**characterised in that** an electric component (56) for the electric motor (5) is located in the flow path of the cooling air, preferably together with a heat exchanger (24).

## Revendications

1. Appareil électrique tenu à la main, en particulier appareil portatif tenu à la main tel qu'un taille-haie, une tronçonneuse, une débroussailleuse ou autre, avec un boîtier d'appareil (2) dans lequel est disposé un moteur électrique (5), à commander par l'intermédiaire d'un composant électrique (56), pour entraîner un outil (8), étant précisé que le moteur électrique (5) aspire de l'air de refroidissement (55) dans un boîtier de moteur (38) par l'intermédiaire d'une roue de soufflante (33), et l'expulse du boîtier de moteur (38) par une ouverture d'expulsion (35, 36), et que l'air de refroidissement entre dans un espace d'entrée d'air de refroidissement (40), à l'intérieur du boîtier d'appareil (2), par une fenêtre d'entrée d'air de refroidissement (42) prévue dans la paroi extérieure (41) du boîtier d'appareil (2), et sort du boîtier d'appareil (2) et d'un espace de sortie d'air de refroidissement (50), à l'intérieur du carter d'appareil (2), par une fenêtre de sortie d'air de refroidissement (52) prévue dans la paroi extérieure (41) du boîtier d'appareil (2), étant précisé que l'espace d'entrée d'air de refroidissement (40) et l'espace de sortie d'air de refroidissement (50) sont séparés de manière globalement étanche à l'air par une paroi de boîtier intérieure (39), et que le boîtier de moteur (38) du moteur électrique (5) forme la seule liaison d'écoulement marquée entre les espaces (40, 50),
**caractérisé en ce que** la fenêtre d'entrée d'air de refroidissement (42) et la fenêtre de sortie d'air de refroidissement (52) prévues dans la paroi extérieure (41) du boîtier (2) forment une zone de fenêtre commune (49).

2. Appareil électrique selon la revendication 1,
**caractérisé en ce que** la fenêtre commune (49) est divisée par la paroi de boîtier intérieure (39) qui est appliquée, à l'intérieur, contre la paroi extérieure (41) du boîtier d'appareil (2).

3. Appareil électrique selon la revendication 1 ou 2,
**caractérisé en ce que** l'espace d'entrée d'air de refroidissement (40) est alimenté par deux fenêtres d'entrée d'air de refroidissement (42).

4. Appareil électrique selon l'une des revendications 1 à 3,
**caractérisé en ce que** le boîtier de moteur (38) présente deux ouvertures d'expulsion (35, 36) et qu'à chaque ouverture d'expulsion (35, 36) est associée une fenêtre de sortie (52) prévue dans le boîtier d'appareil (2).

5. Appareil électrique selon l'une des revendications 1 à 4,
**caractérisé en ce que** le boîtier d'appareil (2) présente un axe longitudinal d'appareil (43) et que sur chaque côté longitudinal (47, 48) du boîtier d'appareil (2) sont disposées une fenêtre d'entrée d'air de refroidissement (42) et une fenêtre de sortie d'air de refroidissement (52).

6. Appareil électrique selon la revendication 4 ou 5,
**caractérisé en ce que** la première ouverture d'expulsion (35) expulse l'air de refroidissement par une première fenêtre de sortie d'air de refroidissement (52) prévue sur un côté longitudinal (47) du boîtier d'appareil (2), et la seconde ouverture expulsion (36) expulse l'air de refroidissement par une seconde fenêtre de sortie d'air de refroidissement (52) prévue sur l'autre côté longitudinal (48) du boîtier d'appareil (2).

7. Appareil électrique selon l'une des revendications 1 à 6,
**caractérisé en ce que** le boîtier d'appareil (2) se compose d'une coque de boîtier supérieure (4) et d'une coque de boîtier inférieure (3), et la fenêtre d'entrée d'air de refroidissement (42) et la fenêtre de sortie d'air de refroidissement (52) sont formées dans la coque de boîtier supérieure (4).

8. Appareil électrique selon l'une des revendications 1 à 7,
**caractérisé en ce que** l'espace d'entrée d'air de refroidissement (40) est délimité par la paroi extérieure (41) du boîtier d'appareil (2) et la paroi de boîtier intérieure (39).

9. Appareil électrique selon l'une des revendications 1 à 8,
**caractérisé en ce que** le moteur électrique (5) porte un capot de circulation d'air (30) qui forme la paroi de boîtier intérieure (39).

10. Appareil électrique selon la revendication 9,
**caractérisé en ce que** le capot de circulation d'air (30) est fixé au moteur électrique (5).

11. Appareil électrique selon la revendication 9 ou 10,
**caractérisé en ce que** le capot de circulation d'air (30) forme un fond (31) de l'espace d'entrée d'air de refroidissement (40), et l'ouverture d'aspiration (54) vers la roue de soufflante (33) se trouve dans le fond (31) du capot de circulation d'air (30).

12. Appareil électrique selon l'une des revendications 1 à 11,
**caractérisé en ce qu'**il est prévu entre la fenêtre d'entrée (42) et la fenêtre de sortie (52), sur la trajectoire d'écoulement de l'air de refroidissement (55), un échangeur de chaleur (24) pour un composant électrique (56) destiné à commander le moteur électrique (5).

13. Appareil électrique selon la revendication 12,
**caractérisé en ce que** l'échangeur de chaleur (24) est disposé dans l'espace de sortie d'air de refroidissement (50).

14. Appareil électrique selon la revendication 12 ou 13,
**caractérisé en ce que** l'échangeur de chaleur (24) se trouve dans le courant d'expulsion (53) de l'ouverture d'expulsion (35) du boîtier de moteur (38).

15. Appareil électrique selon l'une des revendications 1 à 14,
**caractérisé en ce qu'**un composant électrique (56) destiné à commander le moteur électrique (5) se trouve, de préférence avec un échangeur de chaleur (24), sur la trajectoire d'écoulement de l'air de refroidissement.
